# EUROPEAN PATENT SPECIFICATION

(11) **EP 2 607 677 B1**
(45) Date of publication and mention of the grant of the patent: **29.07.2015**
(21) Application number: 12197568.4
(22) Date of filing: 17.12.2012
(51) Int. Cl.: F02M 25/08, B60K 15/035, B62K 11/00

(54) **Canister arrangement structure of motorcycle**
Behälteranordnungsstruktur eines Motorrads
Structure d'agencement de cartouche filtrante de motocyclette

(30) Priority: 20.12.2011 JP 2011278203
(43) Date of publication of application: 26.06.2013
(73) Proprietor: Suzuki Motor Corporation, Shizuoka-ken 432-8611 (JP)
(72) Inventor: Oura, Kosei, Shizuoka-Ken, 432-8611 (JP); Suzuki, Yuji, Shizuoka-Ken, 432-8611 (JP)
(74) Representative: Klunker . Schmitt-Nilson . Hirsch

(56) References cited:
- EP-A1- 0 404 195
- EP-A1- 2 206 910
- US-A1- 2010 243 360

## Description

### Field of the Invention

The present invention relates to a canister arrangement structure of a motorcycle according to the preamble of claim 1. Such canister arrangement adsorbs fuel vapor.

### Description of the Related Art

In recent years, there has been a demand to control emission of fuel vapor (evaporation gas) from a fuel tank of, for example, a motorcycle, in consideration of environmental impacts. To control the emission of fuel vapor, a canister filled with activated carbon for adsorbing fuel vapor is mounted to a motorcycle.

The canister is connected to a breather via a pipe (a charge hose). The breather performs gas-liquid separation of fuel. The canister thereby adsorbs fuel vapor discharged from the breather. The fuel vapor adsorbed by the canister is delivered to a combustion chamber of an engine through another pipe (a purge hose), and is burned therein.

A structure in which a canister is supported on a frame on a rear side of a vehicle (for example, motorcycle) body by using a mounting bracket has been known as a canister arrangement structure in motorcycles (e.g., see Patent Document 1: Japanese Patent Laid-Open Publication No. 2010-229840).

In a scooter-type motorcycle disclosed in Patent Document 1, a fuel tank is supported on a rear frame on a vehicle rear side. Meanwhile, a canister is supported on a lower portion of a rear cross frame. The rear cross frame connects right and left rear frames. The rear cross frame is arranged downwardly ahead of the fuel tank. Thus, the canister is also located downwardly in front of the fuel tank.

Further, in the canister arrangement structure disclosed in Patent Document 1, a charge hose connecting the canister and a breather is vertically extended. When the charge hose is extended, it is inconvenient to attach other components to the structure. Such conventional arrangement structure also has a defect such that liquid fuel attached to an inner wall of the charge hose flows into the canister by gravity to cause degradation in performance of the canister.

In accordance with the preamble of claim 1, EP 2 206 910 A1 discloses a canister arrangement structure of a motorcycle, in which a canister is provided in a manner such that the fuel tank and the canister are arranged within a tunnel protruding upward from front steps on which feet of the rider rest. The fuel tank has substantially triangular shape and is formed with a fuel gas discharge port at the upper portion on the front side next to a fuel feed port. The canister is disposed at a lower portion on the rear side of the fuel tank and is connected to a guide tube extending rearwardly downward from the fuel gas discharge port. Therefore, liquid fuel entering the guide tube cannot be returned to the fuel tank and flows into the canister which results in degradation in performance.

### SUMMARY OF THE INVENTION

The present invention has been made in view of the above circumstances and an object thereof is to provide a canister arrangement structure of a motorcycle in which a pipe of a canister can be made short to thereby suppress degradation in performance.

The above and other objects can be achieved according to the present invention by providing a canister arrangement structure of a motorcycle having the features of claim 1. It absorbs fuel vapor with improved performance.

According to this arrangement structure of the canister of the motorcycle, the discharge port, from which the fuel vapor generated in the fuel tank is discharged, is provided in the upper surface of the fuel tank, and the canister is arranged on the fuel tank. Accordingly, a charge hose connecting the discharge port and the canister can be shortened. In addition, since the charge hose can be substantially horizontally arranged, liquid fuel adhering to an inner wall of the charge hose can be returned into the fuel tank from the discharge port. Accordingly, the liquid fuel can be prevented from flowing into the canister to cause degradation in performance. That is, the canister arrangement structure can shorten the pipe of the canister, and can suppress the degradation in performance.

The fuel tank has a lower surface curved so as to have a depth larger toward to another side from the one side in the motorcycle longitudinal direction, and the lower surface has a concave portion (shape) recessed upwardly so as to correspond to an outer shape of a wheel of the motorcycle which vertically swings under the lower surface of the fuel tank, and the fuel tank also has an upper surface having a concave portion that is downwardly formed to a position below the one side on the another side in the motorcycle longitudinal direction, the canister being arranged in the concave portion in the upper surface of the fuel tank.

In the above arrangement, it may be desired that the concave portion of the fuel tank is provided with an ejection port of a fuel pump, and the canister is arranged between the ejection port and the discharge port. The upper surface of the fuel tank is covered by a fuel tank cover made of synthetic resin, and the fuel tank cover is provided with a holding portion holding the canister at a position corresponding to the concave portion of the fuel tank.

In the above structure, since the canister is arranged in the concave portion in the upper surface of the fuel tank, a seat can be provided at a low position even if the seat is arranged above the fuel tank. Since the lower surface of the fuel tank is curved such that the fuel tank has a depth larger toward the another side in the vehicle (motorcycle) longitudinal direction, a wide fuel storage space can be ensured even if the concave portion, in which the canister is arranged, is provided on the another side in the upper surface.

Furthermore, according to the canister arrangement structure of the present invention, since the canister is held by the fuel tank cover made of synthetic resin, the fuel tank cover functions as an anti-vibration member to prevent vibrations of the canister. Accordingly, it is not necessary to separately provide an anti-vibration member for preventing the vibrations of the canister.

Furthermore, since a fuel level on the rear side in the fuel tank becomes lower in deceleration of the vehicle in which a larger inertial force than that in acceleration is applied, the liquid fuel can be prevented from flowing out of the discharge port. Accordingly, the liquid fuel can be prevented from flowing into the canister to cause the degradation in the performance of the canister.

The nature and further characteristic features of the present invention will be made clearer from the following descriptions made with reference to the accompanying drawings.

### BRIEF DESCRIPTION OF THE DRAWINGS

Fig. 1 is a left side view illustrating an outer appearance of a motorcycle according to a present embodiment;
Fig. 2 is a perspective view illustrating a fuel tank and a surrounding structure of the motorcycle of Fig. 1 according to the present embodiment;
Fig. 3 is an illustration of right side view of the fuel tank and the surrounding structure according to the present embodiment;
Figs. 4A and 4B (Fig. 4) are perspective views illustrating the fuel tank to which a cover is mounted and the surrounding structure thereof;
Fig. 5 is a sectional view illustrating the fuel tank and the surrounding structure taken along a vertical plane passing through a center in a vehicle (i.e., motorcycle) width direction; and
Figs. 6A to 6D (Fig. 6) are schematic views illustrating a relationship between states of the fuel tank of the vehicle and the fuel levels thereof.

### DESCRIPTION OF THE PREFERRED EMBODIMENT

Hereunder, a present embodiment will be described in detail with reference to the accompanying drawings. Although one example in which a canister arrangement structure according to the present invention is applied to a scooter-type motorcycle will be described below, the present invention is not limited thereto. For example, the canister arrangement structure according to the present invention may be applied to a motorcycle of another type.

It is further to be noted that terms "upper", "lower", "right", "left" and the like terms representing directions are used herein in the illustrated state or in a general standing state of a motorcycle, and also, in the respective drawings, a front side of a vehicle body is indicated by an arrow F. In addition, the term "vehicle (vehicle body)" used herein is equivalently used as "motorcycle (motorcycle body)" for the sake of convenience.

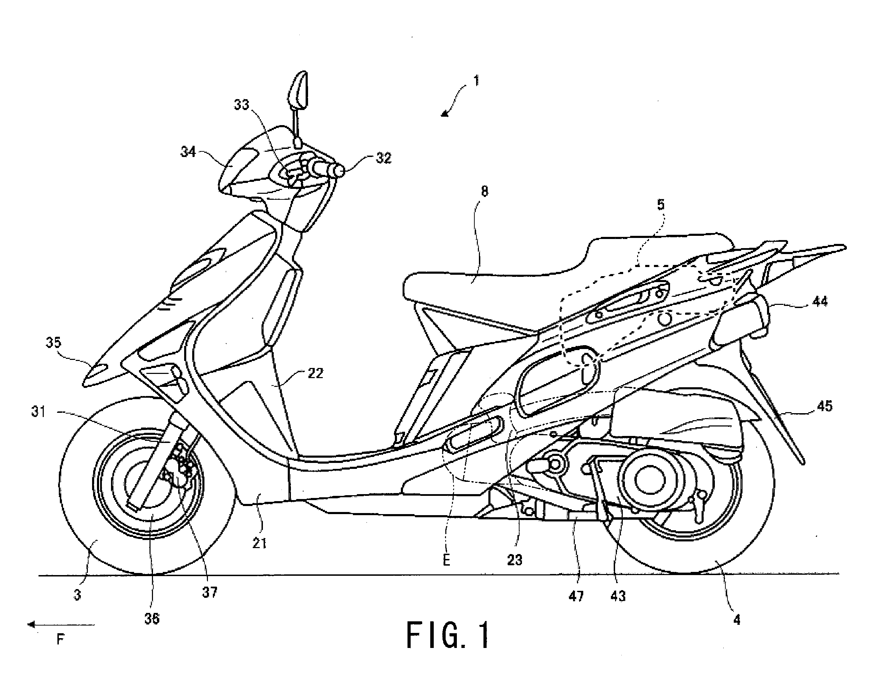

First, a configuration of a motorcycle according to the present embodiment will be described by reference to Fig. 1 being a left side view of the motorcycle.

As shown in Fig. 1, a scooter-type motorcycle 1 is provided with an underbone frame, not shown, made of steel or aluminum alloy, and various covers mounted thereto as a vehicle exterior.

In the motorcycle 1, a leg shield 21 that protects legs of a driver is provided on the front side. A center frame cover 22 is provided behind the leg shield 21. A side frame cover 23 that covers a vehicle side surface is provided behind the center frame cover 22.

A front fork 31 is rotatably supported on the vehicle front side via a steering shaft, not shown. A handle bar 32 that allows steering of a front wheel 3 is provided above the front fork 31. A brake lever 33 is provided at the handle bar 32. A headlight 34 is arranged in front of the handle bar 32. The front wheel 3 is rotatably supported on a lower portion of the front fork 31. A front fender 35 is provided so as to cover an upper portion of the front wheel 3. A brake disk 36 and a caliper 37 that sandwiches the brake disk 36 are provided at the front wheel 3.

A seat 8 is provided on the side frame cover 23. A taillight 44 and a rear fender 45 are provided at a rear portion of the side frame cover 23. A fuel tank 5 is arranged under the seat 8 inside the side frame cover 23. An engine E is arranged downwardly in front of the fuel tank 5. A mixture of air and fuel is supplied to a combustion chamber of the engine. Gas obtained after combustion is discharged as exhaust gas from a muffler, not shown. The muffler is provided backwardly on a right side surface of the engine.

A swing arm, not shown, is supported on a lower side of the side frame cover 23 in a vertically swingable manner. A suspension, not shown, is mounted between the vehicle body frame and the swing arm. A rear wheel 4 is rotatably supported on a rear portion of the swing arm.

A chain cover 43 is provided to the left of the rear wheel 4. A rear sprocket and a chain are stored in the chain cover 43. The rear sprocket and the chain transmit power of the engine to the rear wheel 4. A side stand 47 that supports the vehicle is also provided in front of the chain cover 43.

An air cleaner box, not shown, is arranged inside the center frame cover 22. The leg shield 21 is formed so as to introduce air into the air cleaner box from a gap between the leg shield 21 and the front fender 35. The air guided into the air cleaner box is delivered into the engine arranged downwardly behind the leg shield 21 through an intake hose, not shown.

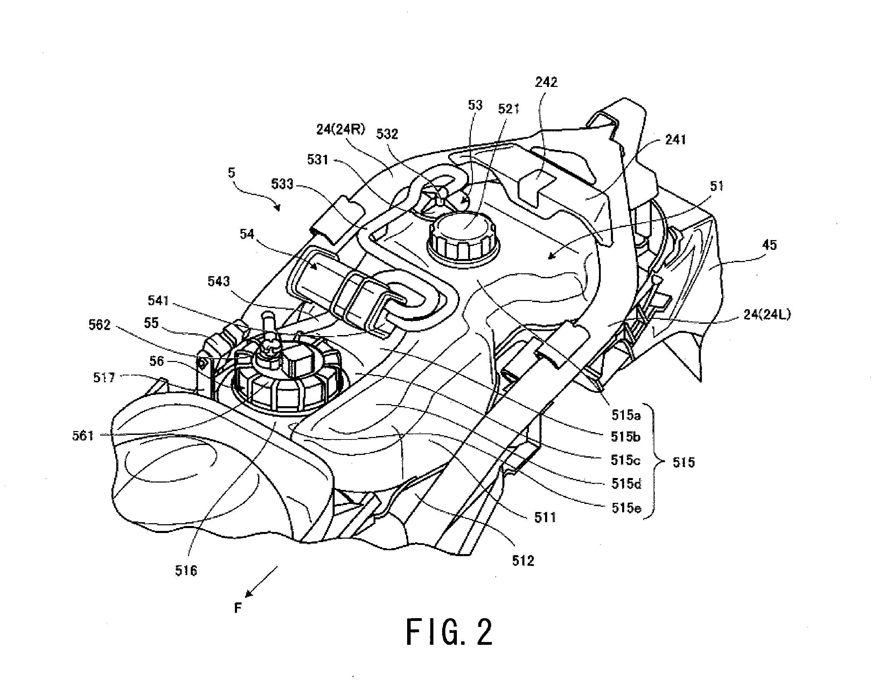

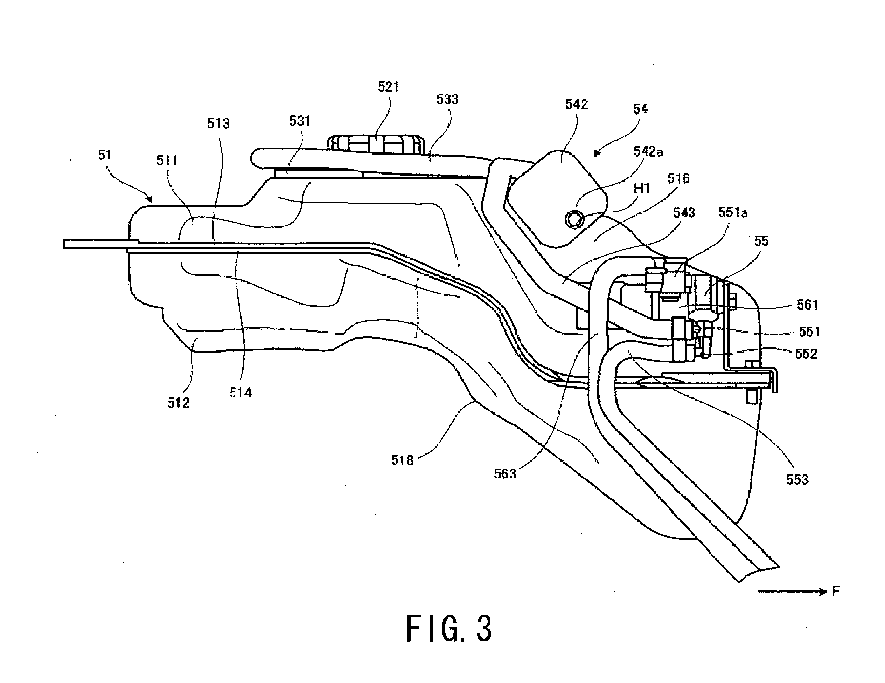

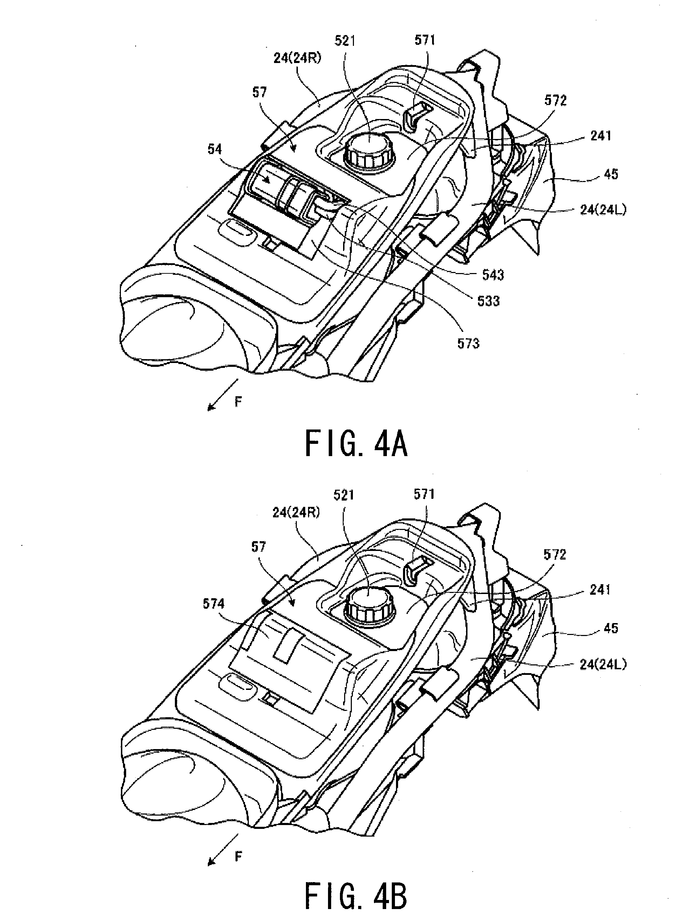

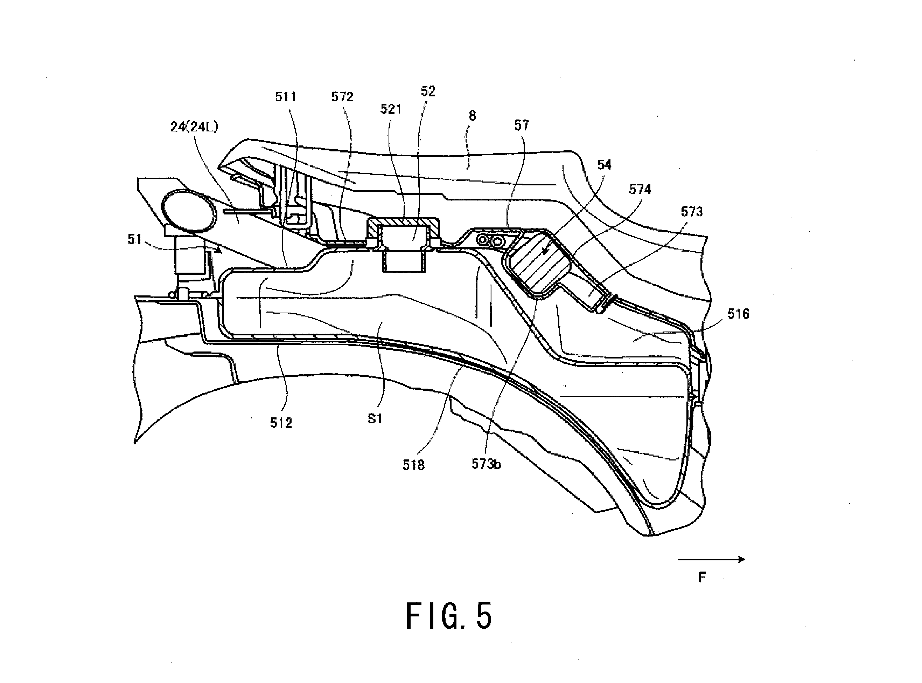

The canister arrangement structure according to the present embodiment will be described hereunder with reference to Figs. 2 to 5. Fig. 2 is a perspective view illustrating the fuel tank and a surrounding structure according to the present embodiment, Fig. 3 is a right side view illustrating the fuel tank and the surrounding structure, Fig. 4 illustrates the fuel tank to which a cover is mounted and the surrounding structure, and Fig. 5 is a sectional view illustrating the fuel tank and the surrounding structure taken along a vertical plane passing through a center in a vehicle width direction. The configuration is partially omitted in Fig. 5 for the convenience of illustration.

As shown in Fig. 2, a tank body 51 of the fuel tank 5 is supported on right and left rear frames 24 (24L, 24R) that extend diagonally upward to a rear side of the vehicle body. As shown in Figs. 2, 3 and 5, the tank body 51 is composed of an upper shell 511 having an opened lower and a lower shell 512 having an opened upper surface. The upper shell 511 and the lower shell 512 are joined together by means of flanges 513 and 514. A fuel storage space S1 is formed in the tank body 51 by joining the upper shell 511 and the lower shell 512 together as shown in Fig. 5. The storage space S1 in the tank body 51 is formed so as to have a depth larger toward the vehicle front side. Thus, the tank body 51 can store a large amount of fuel on the vehicle front side more than on the vehicle rear side.

As shown in Fig. 2, an upper surface portion 515 of the upper shell 511 includes a first flat portion 515a, a first inclined portion 515b, a second flat portion 515c, a slightly-inclined portion 515d, and a second inclined portion 515e.

The first flat portion 515a is substantially flat and located on the vehicle rear side. The first inclined portion 515b is inclined diagonally downward and located to the right front side of the first flat portion 515a. The second flat portion 515c is substantially flat and located to the front of the first inclined portion 515b.

Meanwhile, the slightly-inclined portion 515d is slightly inclined diagonally downward and located to the left front side of the first flat portion 515a. The second inclined portion 515e is provided between the first inclined portion 515b and the second flat portion 515c, and the slightly-inclined portion 515d so as to connect the portions 515b, 515c and 515d. A concave portion 516 is downwardly formed by the first inclined portion 515b, the second flat portion 515c, and the second inclined portion 515e on the vehicle right front side of the upper surface portion 515.

A filler opening 52 is provided close to a center of the first flat portion 515a so as to penetrate through the upper shell 511 as shown in Fig. 5. A fuel cap 521 is mounted so as to close to the filler opening 52. When a filler gun, not shown, is connected to the filler opening 52 in a state in which the fuel cap 521 is removed therefrom, the fuel is supplied to the storage space S1 in the tank body 51.

As shown in Figs. 2 and 3, a breather device 53 is provided rightwardly behind the filler opening 52 and the fuel cap 521. The breather device 53 separates liquid fuel and the fuel vapor generated in the storage space. The breather device 53 has a housing 531 that is exposed on the first flat portion 515a of the upper shell 511. A connector section 532 constituting a discharge port for the fuel vapor is provided in an upper portion of the housing 531.

A canister 54 is connected to the connector section 532 of the breather device 53 via a charge hose 533 constituting a flow passage for the fuel vapor. Accordingly, the fuel vapor discharged from the breather device 53 is guided into the canister 54 through the charge hose 533. The canister 54 has an outer configuration of a square pillar shape. The canister 54 is arranged on the vehicle rear side of the concave portion 516 such that the longitudinal direction of the canister is aligned with the vehicle width direction. The charge hose 533 is connected to a left side surface portion 541 of the canister 54 corresponding to a bottom surface of the square pillar shape.

The canister 54 is supported at such a height position that a portion connected to the charge hose 533 is located at about the same height as the connector section 532 of the breather device 53. Accordingly, the charge hose 533 is arranged substantially parallel to the first flat portion 515a of the upper surface portion 515.

Because of the arrangement as described above, the liquid fuel attached to an inner wall of the charge hose 533 is easily returned into the tank body 51 through the connector section 532. As a result, the liquid fuel can be prevented from flowing into the canister to cause degradation in performance. A distance between the connector section 532 of the breather device 53 and the portion connected to the charge hose 533 can be also shortened in the arrangement. That is, the charge hose 533 can be shortened.

As shown in Fig. 2, the charge hose 533 is also bent at a plurality of positions. To be more specific, the charge hose 533 extends backward from the connector section 532, is bent substantially 180° in a counterclockwise fashion in a plan view, and then extends forward. Thereafter, the charge hose 533 is slightly bent leftward at a position rightwardly ahead of the connector section 532, extends forward again, is bent substantially 90° in a counterclockwise fashion in a plan view between the breather device 53 and the canister 54, and then extends leftward. The charge hose 533 is further bent substantially 180° in a counterclockwise fashion in a plan view, and then extends rightward to be connected to the canister 54.

Since the charge hose 533 is substantially horizontally arranged and bent at the plurality of positions as described above, the liquid fuel can be prevented from flowing into the canister 54 from the connector section 532 of the breather device 53 as described below.

The inner space of the canister 54 is filled with an adsorbent containing activated carbon. The adsorbent adsorbs the fuel vapor discharged from the breather device 53. An open nozzle 542a, opened to atmosphere, is provided in a right side surface portion 542 of the canister 54. A hole H1 constituting an air intake and exhaust port is provided in the open nozzle 542a.

Further, outside air is introduced into the canister 54, and gas from which the fuel vapor has been removed is discharged outside of the canister 54 through the hole H1. A first purge hose 543 is connected to the left side surface portion 541 of the canister 54 adjacent to the charge hose 533. The first purge hose 543 constitutes a flow passage for supplying the fuel vapor inside the canister 54 to the engine side.

The canister 54 is connected to a purge control valve 55 via the first purge hose 543. More specifically, the first purge hose 543 is connected to a first connector section (a first connecting section) 551. The fuel vapor flows into the purge control valve 55 through the first connector section 551. The purge control valve 55 is supported on the right front side of the concave portion 516 by a stay 517. The stay 517 is mounted to a right front portion of the tank body 51. A second purge hose 553 is connected to a second connector section (a second connecting section) 552. The fuel vapor flows out of the purge control valve 55 through the second connector section 552. The purge control valve 55 is thereby connected to an air intake side of the engine via the second purge hose 553.

The purge control valve 55 is adapted to control a gas flow rate through the first purge hose 543 and the second purge hose 553 according to an operating state of the engine. For example, the purge control valve 55 is opened during the operation of the engine and is closed when the operation of the engine is stopped. The fuel vapor in the canister 54 is supplied to the engine during the operation of the engine by performing such controlling operation. The purge control valve 55 may be a mechanical valve that is opened by a negative pressure, or an electric valve that is electrically controlled according to the operating state of the engine.

A fuel pump 56 is provided on the font side of the upper shell 511. The fuel pump 56 has a housing 561 that is exposed on the second flat portion 515c. A connector section 562 as a fuel ejection port is provided at an upper portion of the housing 561. The connector section 562 is connected to the engine side via a fuel hose 563 constituting a fuel flow passage. Thus, the fuel ejected from the fuel pump 56 can be supplied to the engine. The fuel pump 56 is adapted to suck the fuel in the vicinity of a bottom surface of the lower shell 512 on the front side to thereby pump up the fuel from a deep position in the tank body 51.

The lower shell 512 has a shape inclined forwardly downward so as to ensure a wide space for the storage space S1. The lower shell 512 also has a shape corresponding to the rear wheel 4 located below the tank body 51. To be more specific, a lower surface portion 518 of the lower shell 512 is curved in an arc shape in a side view so as to allow vertical swing of the rear wheel 4. Accordingly, the vertically swinging rear wheel 4 and the lower shell 512 can be avoided from contacting each other while a sufficient amount of fuel is being stored.

As shown in Fig. 5, the seat 8 is arranged above the fuel tank 5 so as to provide a gap between the seat 8 and the tank body 51. Since the canister 54 is arranged in the concave portion 516 in the motorcycle 1 according to the present embodiment, the seat 8 can be located at a low position even when the seat 8 is arranged above the fuel tank 5. It is thus easy for a user to climb on and off the motorcycle 1. Since a user also easily touches the ground with his/her feet, a burden on the user at the time of stopping at a red light signal or the like can be reduced.

As shown in Figs. 4A and 5, a tank cover 57 made of synthetic resin is arranged above the fuel tank 5. The tank cover 57 covers the upper surface portion 515 of the tank body 51. An engaging member 571 is provided at a rear end portion of the tank cover 57 so as to projects to a reverse surface side. The engaging member 571 is engaged with a bridge member 241. The bridge member 241 links the right and left rear frames 24L and 24R as shown in Fig. 2. Specifically, the engaging member 571 is engaged with a concave bracket member 242 that is provided in a center of the bridge member 241. Accordingly, the tank cover 57 is supported on the rear frames 24.

A concave (recessed) portion 572 is downwardly formed in an upper surface portion of the tank cover 57 on the rear side thereof. The concave portion 572 is formed corresponding to the filler opening 52 and the fuel cap 521. In the concave portion 572, an opening penetrating through the tank cover 57 is provided at a position corresponding to the filler opening 52 and the fuel cap 521. Accordingly, the fuel cap 521 is exposed on the upper surface portion of the tank cover 57 such that the fuel cap 521 is removable therefrom.

A concave (recessed) portion 573 is provided in the upper surface portion of the tank cover 57 at a position corresponding to the concave portion 516 of the tank body 51. The concave portion 573 has a holding section 573b having a shape fitted to an outer shape of the canister 54. The canister 54 is held by the holding section 573b. As shown in Fig. 4B, a canister cover 574 made of synthetic resin is mounted to the concave portion 573. The canister cover 574 covers an upper side of the concave portion 573. The canister 54 is held so as to be sandwiched between the canister cover 574 and the holding section 573b.

The tank cover 57 and the canister cover 574 are made of synthetic resin so as to attain a buffering function, and accordingly, propagation of vibrations to the canister 54 from the rear frames 24 (24L, 24R) or the like can be prevented. That is, it is not necessary to separately provide a buffer member so as to reduce the vibrations of the canister 54 as structural member. As a result, wear of the adsorbent within the canister can be prevented without increasing a cost, so that the degradation in the performance of the canister 54 can be suppressed.

Hereunder, a process for removing the fuel vapor by using the canister 54 of the structures mentioned above will be described.

For example, when the operation of the engine is stopped and a pressure inside the fuel tank 5 is increased by the fuel vapor, the fuel vapor is discharged from the breather device 53. The discharged fuel vapor is introduced into the canister 54 through the charge hose 533. Since the purge control valve 55 is closed, the fuel vapor does not flow through the first purge hose 543 and the second purge hose 553.

Furthermore, since the hole H1 is provided in the right side surface portion 542 of the canister 54, the fuel vapor introduced into the canister 54 flows to the hole H1 on the right side from the left side of the canister 54. The fuel vapor is adsorbed by the adsorbent in the canister 54 when the gas containing the fuel vapor passes through the adsorbent. Accordingly, the fuel vapor is removed, and the gas from which the fuel vapor has been removed is discharged outside of the canister 54 from the hole H1.

Meanwhile, when the operation of the engine is started and a negative pressure is applied to the second purge hose 553 from the engine, the purge control valve 55 is opened. As a result, the pressure inside the canister 54 is decreased, and the air flows into the canister 54 from the hole H1. The air flowing from the hole H1 is delivered to the combustion chamber of the engine through the first purge hose 543 and the second purge hose 553. When the air flowing from the hole H1 passes through the adsorbent, the fuel vapor adsorbed by the adsorbent is desorbed from the adsorbent. The desorbed fuel vapor is burned in the engine.

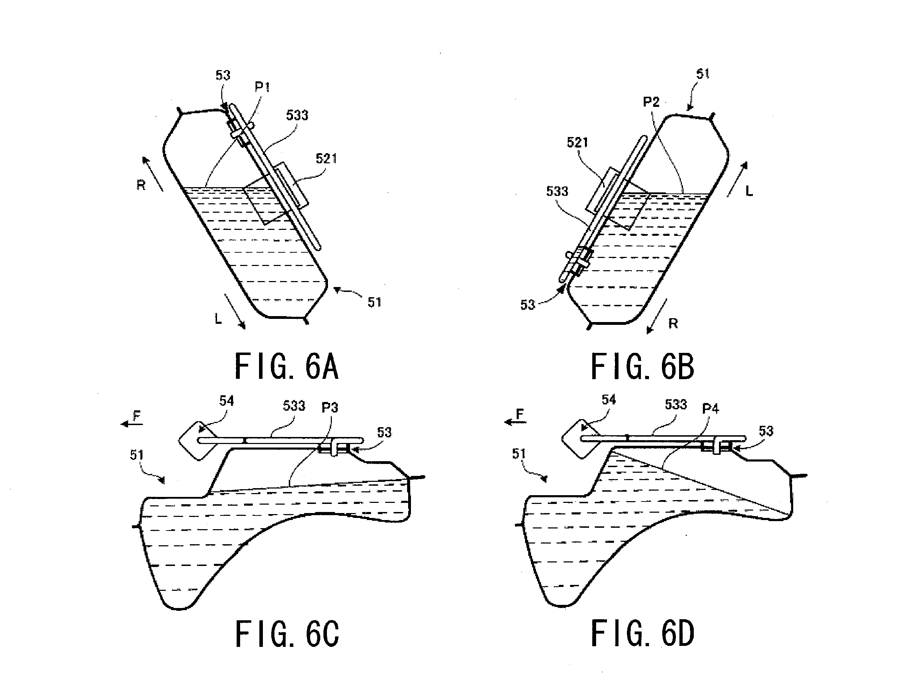

Hereunder, a relationship between a vehicle state (i.e., attitude) and a fuel level will be described by reference to Fig. 6 (Figs. 6A to 6B which are schematic views illustrating the relationship between the vehicle state and the fuel level). In Figs. 6A and 6B, the left side of the vehicle body is indicated by an arrow L, and the right side of the vehicle body is indicated by an arrow R.

As described above, the breather device 53 is arranged on the vehicle right rear side of the upper surface portion 515 of the upper shell 511. The fuel level in the longitudinal and right-left directions is almost horizontal when the vehicle is in a standing stationary state. Thus, the breather device 53 located on the right rear side of the tank body 51 and the fuel level remain separate from each other, and the liquid fuel is hardly discharged from the breather device 53.

When the vehicle leans to the left by falling or the like, the fuel also moves to the left in the tank body 51 as shown in Fig. 6A. In this state, a fuel level P1 and the breather device 53 on the right side remain separate from each other. The fuel thus does not enter the breather device 53. Since the breather device 53 is arranged on the vehicle right side as described above, the liquid fuel is hardly discharged from the breather device 53 even when the vehicle leans to the left. As a result, the fuel can be prevented from flowing into the canister 54 to cause the degradation in the performance of the canister 54.

Meanwhile, when the vehicle leans to the right by falling or the like, the fuel also moves to the right in the tank body 51 as shown in Fig. 6B. In this state, a bottom surface of the breather device 53 becomes lower than a fuel level P2, so that the fuel is discharged to the charge hose 533 from the breather device 53. However, since the charge hose 533 is bent at a plurality of positions, the fuel discharged from the connector section 532 of the breather device 53 hardly flows into the canister 54. In addition, since the charge hose 533 is arranged substantially parallel to the upper surface portion 515 (the first flat portion 515a) of the tank body 51, the fuel flowing out into the charge hose 533 tends to be returned into the tank body 51. As described above, even if the vehicle leans to the right, the liquid fuel hardly flows into the canister 54. Accordingly, the fuel can be prevented from flowing into the canister 54 to cause the degradation in the performance of the canister 54, thus being advantageous.

Next, as shown in Fig. 6C, an inertial force toward the vehicle rear side acts on the fuel in acceleration of the vehicle. In this case, a fuel level P3 becomes higher on the vehicle rear side. However, the inertial force in accordance with the acceleration is relatively small, and the fuel level P3 does not dramatically rise even on the vehicle rear side. Thus, even if the breather device 53 is located on the vehicle rear side, the breather device 53 and the fuel level P3 remain separate from each other, and the fuel is hardly discharged from the breather device 53.

Meanwhile, as shown in Fig. 6D, in a case when a strong inertial force toward the vehicle front side acts on the fuel in deceleration (braking) of the vehicle, a fuel level P4 becomes higher on the vehicle front side. The inertial force in accordance with the deceleration is larger and has a longer duration than the inertial force in accordance with the acceleration. Thus, the fuel level P4 dramatically rises on the vehicle front side, and drops on the vehicle rear side. In addition, since the breather device 53 is located on the vehicle rear side, the breather device 53 and the fuel level P4 remain separate from each other. In this state, the fuel does not enter the breather device 53.

Furthermore, since the breather device 53 is arranged on the vehicle rear side as described above, the liquid fuel is hardly discharged from the breather device 53 in the deceleration. Accordingly, the fuel can be prevented from flowing into the canister 54 to cause the degradation in the performance of the canister 54.

As described above, in the canister arrangement structure according to the described embodiment of the present invention, the connector section 532 (the discharge port) of the breather device 53, from which the fuel vapor generated in the tank body 51 is discharged, is provided in the upper surface portion 515 (an upper surface) of the tank body 51 (the fuel tank 5), and the canister 54 is arranged above the fuel tank 5. Accordingly, the charge hose 533 connecting the connector section 532 and the canister 54 can be shortened.

Furthermore, since the charge hose 533 can be substantially horizontally arranged (substantially parallel to the upper surface portion 515 (the first flat portion 515a)), the liquid fuel attached to the inner wall of the charge hose 533 can be returned into the fuel tank 5 from the discharge port. Accordingly, the liquid fuel can be prevented from flowing into the canister 54 to cause the degradation in the performance of the canister 54. That is, there can be provided the canister arrangement structure capable of shortening the pipe of the canister and suppressing the degradation in the operational performance.

Furthermore, since the canister 54 is arranged in the concave portion 516, the seat 8 can be located at a low position even when the seat 8 is arranged above the fuel tank 5. In addition, since the lower surface portion 518 (a lower surface) of the fuel tank 5 is curved such that the fuel tank 5 has a greater depth to the front side (another side) in the vehicle longitudinal direction, a wide space can be ensured for the fuel storage space S1 even if the concave portion 516 in which the canister 54 is arranged is provided on the front side of the upper surface portion 515.

Still furthermore, since the canister 54 is held by the tank cover 57 (the fuel tank cover) made of synthetic resin, the tank cover 57 functions as an anti-vibration member to prevent vibrations of the canister 54. It is thus not necessary to separately provide an anti-vibration member for preventing the vibrations of the canister 54.

In addition, the connector section 532 (the discharge port) of the breather device 53 is provided on the rear side the fuel tank, so that the fuel level on the rear side in the fuel tank 5 becomes lower in the deceleration in which a larger inertial force than that in the acceleration is applied, and accordingly, the liquid fuel can be prevented from flowing out of the connector section 532. Thus, the liquid fuel can be prevented from flowing into the canister 54 to cause the degradation in the performance of the canister 54.

It should be noted that the present invention is not limited to the aforementioned embodiment, and various changes and modifications or alternations may be made without departing from the spirits and scopes of the appended claims.

For example, in the present embodiment, the size or the shape illustrated in the accompanying drawings may be changed as appropriate within the scope exhibiting the effects of the present invention.

Furthermore, although the example in which the canister has a square pillar shape is described in the embodiment mentioned hereinabove, the canister shape is not limited thereto. For example, a canister having a cylindrical outer shape may be also applied. In this case, the shape of the holding section for holding the canister may be also changed according to the outer shape of the canister.

Furthermore, although the example in which the breather device is arranged on the vehicle right side is described in the embodiment mentioned above, the breather device may be arranged on the vehicle left side. In this case, the arrangement of the charge hose may also be reversed.

The canister arrangement structure according to the present invention is useful as a canister arrangement structure in, for example, a scooter-type motorcycle.

## Claims

1. A canister arrangement structure of a motorcycle provided with an engine (E), a fuel tank (5) that stores fuel to be supplied to the engine (E), and a canister (54) that adsorbs fuel gas generated in the fuel tank (5), wherein:
the fuel tank (5) is provided with a discharge port (532), from which the fuel gas generated in the fuel tank (5) is discharged outside of the fuel tank (5), in an upper surface on one side in a longitudinal direction of the motorcycle,
the canister (54) is arranged on the fuel tank (5) at a portion on another side in the motorcycle longitudinal direction with respect to the discharge port (532) formed on one side thereof,
**characterized in that**
the fuel tank (5) is arranged under the seat (8) inside a side frame cover (23) and has a lower surface curved so as to have a depth larger toward the another side in the motorcycle longitudinal direction, and the lower surface has a concave shape (518) recessed upwardly so as to correspond to an outer shape of a wheel of the motorcycle which vertically swings under the lower surface of the fuel tank (5), and the fuel tank (5) also has an upper surface (511) having a concave portion (516) that is downwardly formed to a position below the one side in the motorcycle longitudinal direction, the canister (54) being arranged in the concave portion in the upper surface of the fuel tank (5),
the discharge port of the fuel tank (5) is formed on a rear side of the fuel tank (5) in the longitudinal direction of the motorcycle, and the canister (54) is arranged on a front side of the fuel tank (5), and
the canister (54) and the fuel tank (5) are connected to a charger hose (533) at a same connection height level so as to arrange the charger hose substantially horizontally.

2. The canister arrangement structure according to claim 1, wherein the concave portion of the fuel tank (5) is provided with an ejection port of a fuel pump (56), and the canister (54) is arranged between the ejection port and the discharge port (532).

3. The canister arrangement structure according to claim 1 or 2, wherein the upper surface of the fuel tank (5) is covered by a fuel tank cover (57) made of synthetic resin, and the fuel tank cover (57) is provided with a holding portion (573b) holding the canister (54) at a position corresponding to the concave portion (516) of the fuel tank (5).

## Patentansprüche

1. Filterbehälterstruktur eines Motorrads, das mit einem Motor (E), einem Kraftstofftank (5), der dem Motor (E) zuzuführenden Kraftstoff speichert, und einem Filterbehälter (54), der in dem Kraftstofftank (50) erzeugtes Kraftstoffgas adsorbiert, aufweist, wobei
der Kraftstofftank (5) mit einer Austragöffnung (532) ausgestattet ist, über die das in dem Kraftstofftank (5) erzeugte Kraftstoffgas aus dem Kraftstofftank (5) ausgetragen wird, und die sich in einer Oberseite auf einer Seite in Längsrichtung des Motorrads befindet,
der Filterbehälter (54) an dem Kraftstofftank (5) in einem Bereich auf der anderen Seite in Motorrad-Längsrichtung bezüglich der auf dessen einer Seite gebildeten Austragöffnung (532) angeordnet ist,
**dadurch gekennzeichnet, dass**
der Kraftstofftank (5) unterhalb der Sitzbank (8) im Inneren einer Seitenrahmenverkleidung (23) angeordnet ist und eine derart gekrümmte Unterseite aufweist, dass er eine größere Tiefe in Richtung der anderen Seite in der Motorrad-Längsrichtung aufweist, und die Unterseite eine konkave Form (518) besitzt, die nach oben ausgenommen ist, um der äußeren Form eines Rads des Motorrads zu entsprechen, welches unterhalb der Unterseite des Kraftstofftanks (5) vertikal schwingt, und der Kraftstofftank (5) außerdem eine Oberseite (511) mit einem konkaven Bereich (516) aufweist, der nach unten zu einer Stelle unterhalb der einen Seite in der Motorrad-Längsrichtung geformt ist, wobei der Filterbehälter (54) in dem konkaven Bereich innerhalb der Oberseite des Kraftstofftanks (5) angeordnet ist,
die Austragöffnung des Kraftstofftanks (5) auf einer hinteren Seite des Kraftstofftanks (5) in Längsrichtung des Motors ausgebildet ist und der Filterbehälter (54) an einer Vorderseite des Kraftstofftanks (5) angeordnet ist, und
der Filterbehälter (54) und der Kraftstofftank (5) mit einem Laderschlauch (533) in der gleichen Verbindungshöhe verbunden sind, um den Laderschlauch im wesentlichen horizontal anzuordnen.

2. Filterbehälterstruktur nach Anspruch 1, bei der der konkave Bereich des Kraftstofftanks (5) mit einer Ausstoßöffnung einer Kraftstoffpumpe (56) ausgestattet ist, und der Filterbehälter (54) zwischen der Ausstoßöffnung und der Austragöffnung (532) angeordnet ist.

3. Filterbehälterstruktur nach Anspruch 1 oder 2, bei der die Oberseite des Kraftstofftanks (5) von einer Kraftstofftankabdeckung (57) aus Synthetikharzmaterial abgedeckt ist, und die Kraftstofftankabdeckung (57) mit einem den Filterbehälter (54) an einer dem konkaven Bereich (516) des Kraftstofftanks (5) entsprechenden Stelle haltenden Halteabschnitt (573b) ausgestattet ist.

## Revendications

1. Structure d'agencement de bidon d'une motocyclette dotée d'un moteur (E), d'un réservoir de carburant (5) qui stocke du carburant à alimenter vers le moteur (E), et un bidon (54) qui adsorbe un gaz combustible généré dans le réservoir de carburant (5), dans laquelle :
le réservoir de carburant (5) est doté d'un orifice de refoulement (532) à partir duquel le gaz combustible généré dans le réservoir de carburant (5) est évacué à l'extérieur du réservoir de carburant (5), dans une surface supérieure d'un côté dans une direction longitudinale de la motocyclette,
le bidon (54) est agencé sur le réservoir de carburant (5) au niveau d'une partie sur un autre côté dans la direction longitudinale de motocyclette par rapport à l'orifice de refoulement (532) formé sur un côté de celui-ci,
**caractérisée en ce que**
le réservoir de carburant (5) est agencé sous le siège (8) à l'intérieur d'un couvercle de cadre latéral (23) et présente une surface inférieure incurvée de manière à présenter une profondeur supérieure en direction de l'autre côté dans la direction longitudinale de motocyclette, et la surface inférieure présente une forme concave (518) en retrait vers le haut de manière à correspondre à une forme extérieure d'une roue de la motocyclette qui pivote verticalement sous la surface inférieure du réservoir de carburant (5), et le réservoir de carburant (5) présente également une surface supérieure (511) présentant une partie concave (516) qui est formée vers le bas vers une position située au-dessous du un côté dans la direction longitudinale de motocyclette, le bidon (54) étant agencé dans la partie concave dans la surface supérieure du réservoir de carburant (5),
l'orifice de refoulement du réservoir de carburant (5) est formé sur un côté arrière du réservoir de carburant (5) dans la direction longitudinale de la motocyclette, et le bidon (54) est agencé sur un côté avant du réservoir de carburant (5), et
le bidon (54) et le réservoir de carburant (5) sont reliés à un tube chargeur (533) à un même niveau de hauteur de liaison afin d'agencer le tube chargeur en grande partie horizontalement.

2. Structure d'agencement de bidon selon la revendication 1, dans laquelle la partie concave du réservoir de carburant (5) est dotée d'un orifice d'éjection d'une pompe à carburant (56), et le bidon (54) est agencé entre l'orifice d'éjection et l'orifice de refoulement (532).

3. Structure d'agencement de bidon selon la revendication 1 ou 2, dans laquelle la surface supérieure du réservoir de carburant (5) est couverte par un couvercle de réservoir de carburant (57) en résine synthétique et le couvercle de réservoir de carburant (57) est doté d'une partie de maintien (573b) maintenant le bidon (54) au niveau d'une position correspondant à la partie concave (516) du réservoir de carburant (5).
